# EUROPEAN PATENT SPECIFICATION

(11) **EP 2 202 971 B1**
(45) Date of publication and mention of the grant of the patent: **03.08.2011**
(21) Application number: 08022443.9
(22) Date of filing: 23.12.2008
(51) Int. Cl.: H04N 7/16, H04N 7/173

(54) **A method for identifying a television channel**
Verfahren zur Identifizierung eines Fernsehkanals
Procédé d'identification d'une chaîne de télévision

(43) Date of publication of application: 30.06.2010
(73) Proprietor: Sony Europe Limited, Brooklands Weybridge KT13 0XW (GB)
(72) Inventor: Heider, Frank Fritz, 82110 Germering (DE); Raesig, Tassilo Volker, 84028 Landshut (DE)
(74) Representative: Müller - Hoffmann & Partner

(56) References cited:
- EP-A- 1 732 252
- EP-A- 1 773 056
- WO-A-2007/064055
- US-A1- 2002 032 908
- US-B1- 7 443 873
- JEONG AE HAN ET AL: "Efficient cooperative channel sensing in cognitive radio ad hoc networks" PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 September 2008 (2008-09-15), pages 1-5, XP031371619 ISBN: 978-1-4244-2643-0

## Description

### A METHOD FOR IDENTIFYING A TELEVISION CHANNEL

An embodiment of the invention relates to a method for identifying a television channel. Further embodiments of the invention relate to a receiver, a server, and a system for enhancing a user's television experience.

### BACKGROUND

There are many applications running on television receivers that require a correct identification of a received television channel.

In US 2002/032908 A1, a system and methods for selecting head-end equipment and services for digital cable service distribution systems are disclosed. In an embodiment, a mapping between an end-user display channel, a terrestrial broadcast frequency and a satellite communications frequency is facilitated. The relationship between services, service providers and the necessary component configurations are presented in an easily recognizable format, referred to as a "Channel Map." These features are provided by a user-interface that permits channel assignment and configuration tasks to be performed more easily.

In EP-A-1 773 056, an apparatus and method for providing video on demand services are disclosed. A transmission frequency of a program per channel is updated to detect transport stream identifier even in case that the transmission frequency is varied. The method for providing video on demand service of a receiving system includes updating a channel map if a transmission frequency included in received service information is varied; and extracting and storing transport stream identifier by scanning a transmission frequency band of the channel map.

In US-B1-7 443 873, a method and apparatus for provisioning virtual upstream channels within one physical upstream channel is disclosed. Each virtual upstream channel is assigned to a group of cable modems that share certain operational parameters. New virtual upstream channels can be provisioned as needed and existing virtual upstream channels can be deleted as needed.

In WO 2007/064055 A, a method of performing a service change between multiple services including broadcast channel services delivered through a broadcasting network and content services delivered through the internet is disclosed. The method includes assigning serial numbers to multiple services including broadcast channel services and content services, recording a mapping table for managing serial numbers assigned to multiple services in a memory of a set-top box, and when a specified channel number is received from an input device by a user, moving to a service having a serial number corresponding to the received channel number from the mapping table. The method performs a service change between broadcast channel services and content services. Service change can be performed between multiple services by simply inputting a channel number. The time required for service change and the number of pressing buttons can be reduced.

In EP-A-1 732 252, a host is disclosed which includes a controller configured to receive service information and retrieve defined channel map information and virtual channel map information from the service information. The controller is further configured to resolve inconsistencies between the defined channel map information and the virtual channel map information, and to create a resulting channel map that reflects the resolution of the inconsistencies.

In Jeong Ae Han et al.: "Efficient cooperative channel sensing in cognitive radio ad hoc networks", IEEE 19th International Symposium on Personal, Indoor and Mobile Radio Communications, 2008, it is disclosed to adopt cognitive radio (CR) technology for multi-channel ad hoc networks, since the CR technology can provide enough channels for high speed data transmission. A novel dissemination scheme for channel state information and an adjustment scheme for sensing priorities is proposed. According to the dissemination scheme, a CR node can inform a primary user (PU) presence or a request for a temporary quiet period on a channel for its sensing. When receiving the PU presence on a channel, the CR node adjusts the sensing priority of a channel in order to confirm the availability of the channel by its own sensing. With these schemes, CR nodes cooperate together to accurately maintain the channel state information while each CR nodes grasps available channel in its own location.

It is an object of the invention to provide a method for identifying a television channel or service e.g. in a television network or broadcast via the internet. Further objects are to provide a respective receiver, server and system.

This object is solved by a method, a receiver, a server, and a system according to the independent claims.

Further details of the invention will become apparent from a consideration of the drawings and ensuing description.

### BRIEF DESCRIPTION OF SEVERAL VIEWS OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
Fig. 1 shows an embodiment of a method for identifying a television channel:
Figs. 2A and 2B serve to illustrate the method devices for identifying a television channel at hand of an embodiment with a first and second receiver:
Fig. 3 shows a further embodiment with a plurality of receivers;
Fig. 4 shows an embodiment related to DVB standard;
Fig. 5 shows a further embodiment of a DVB network with two network operators;
Fig. 6 shows an embodiment of an application requiring channel identification at the receiver;
Fig. 7 shows an embodiment where a server transmits program data to a receiver via a broadcaster;
Fig. 8 shows an embodiment where a server sends program data to a receiver via the internet;
Fig. 9 shows a receiver and a server forming a system according to a further embodiment.

### DETAILED DESCRIPTION

In the following, embodiments of the invention are described. It is important to note, that all described embodiments in the following may be combined in any way, i.e. there is no limitation that certain described embodiments may not be combined with others. Further, it should be noted that same reference signs throughout the figures denote same or similar elements.

It is to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

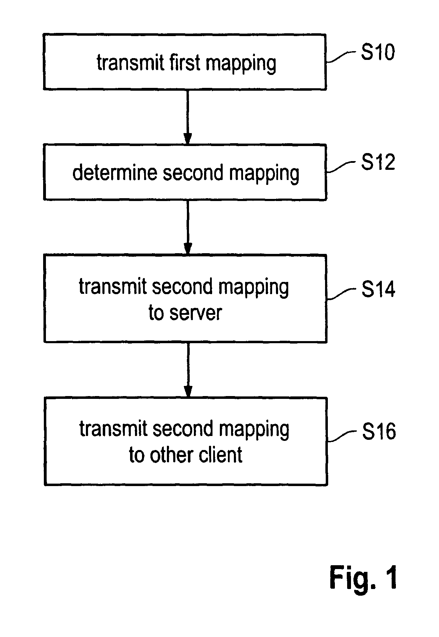

In Fig. 1, at S10, a first mapping is transmitted from a server to a first receiver.

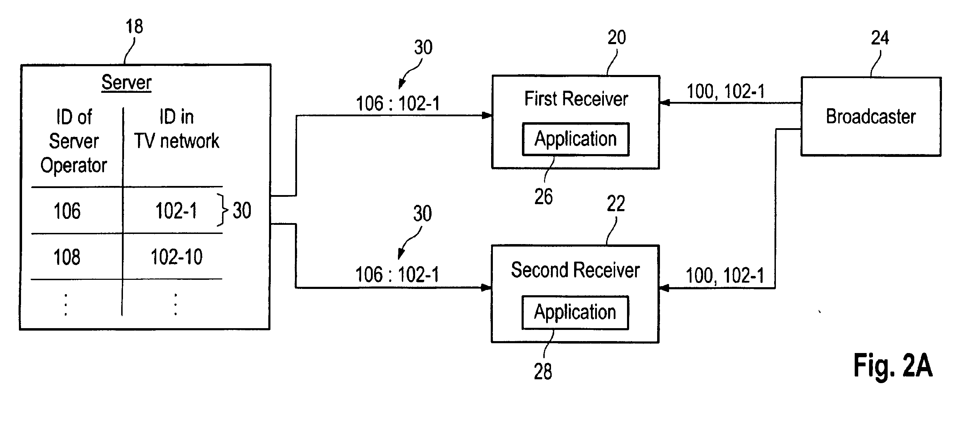

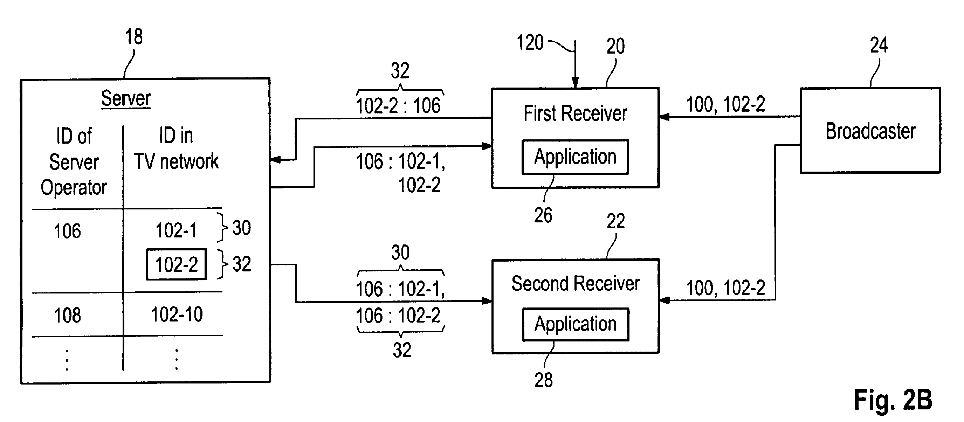

A server might e.g. be operated by a meta data aggregation service providing meta data for receivers receiving a television channel in a television network (see also Figs. 2A and 2B). The meta data might e.g. be program guide data related to a broadcast television channel. Therefore, on the receivers, there may be running an application using the first mapping in order to correctly identify a certain television channel transmitted in the television network.

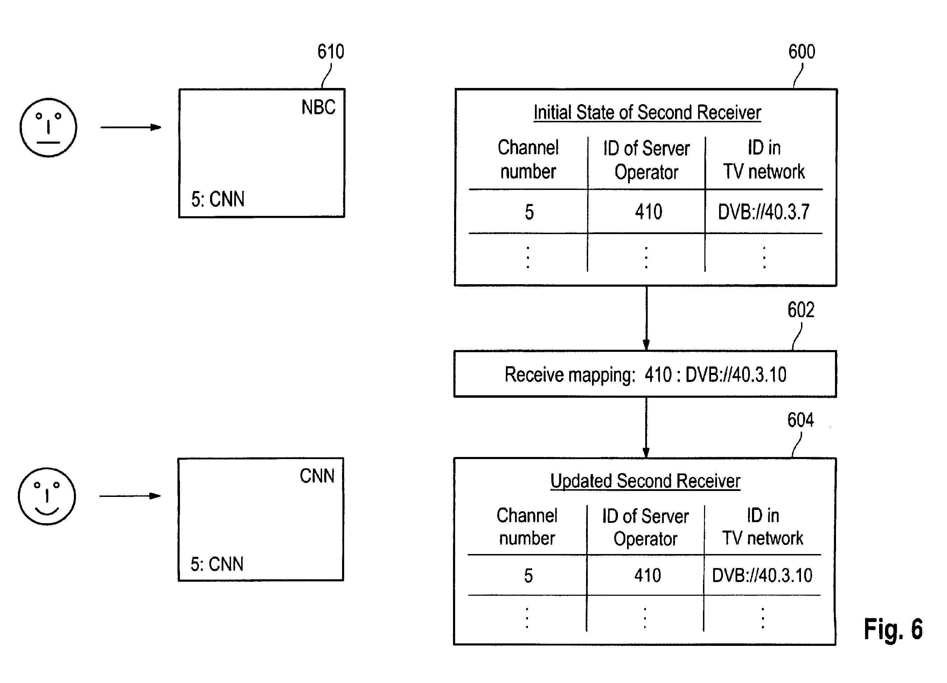

The server might also be hosted by a manufacturer of the receivers or by a related service company, providing service packages, i.e. software updates, for the receivers. The service packages might enable the receivers to adapt a programming of channel numbers (see also Fig. 6).

It should be noted that the term channel is used in the sense of what a television viewer would conventionally understand by the term, for example BBC1, ZDF, TF1, NBC. The term "channel" as intended herein is referred to as a "service" in DVB standards.

The first mapping transmitted at S10 might be a mapping between a first channel identifier and a second channel identifier. The first channel identifier might depend on the television network. For example, the first channel identifier might be an identifier uniquely identifying a television channel in a television network. For example, if the television network is a DVB network, such as a DVB-T, DVB-C or DVB-S network, the channel identifier might be a triplet. In general, the triplet has three parts: a first part, also refer to as original network ID (OID), a second part, also referred to as transport stream ID (TSID), and a third part, also referred to as service ID (SID). The triplet may be written as DVB: / / OID.TSID.SID.

The second channel identifier might be set by an operator of the server. Thus, the operator has full flexibility of assigning its own channel identifiers to television channels transmitted in a plurality of television networks or via the internet (IPTV).

In an embodiment, the first and second channel identifiers might uniquely identify a television channel transmitted in the television network. Thus, if the first mapping is known at the server and/or the receiver, the server/receiver may identify a certain television channel by evaluating the first channel identifier and mapping it to the second channel identifier, set by the operator of the server.

As mentioned, first channel identifier depends on the television network. For example, the first channel identifier might be different for the same television channel depending on whether the television channel is transmitted via cable, e.g. according to DVB-C standard, or via satellite, e.g. via DVB-S. In other words, there may be a situation, where a plurality of first channel identifiers all identify the same television channel. Therefore, in the first mapping one second channel identifier might be mapped to a plurality of first channel identifiers all identifying the same television channel which is also identified by the second channel identifier.

Thus, at a receiver, although a same television channel is received, this television channel might have different first channel identifiers at different receivers. Moreover, the first channel identifiers might not be known at the server since such first channel identifiers might frequently change in television networks. For example, in Europe the DVB landscape covers three main transmissions, such as satellite, cable and terrestrial. With over 30 countries transmitting DVB services, multiplied by three main transmissions multiplied by a high number of operators and many with significant regional differences, the aggregation, i.e. identification, of television channels received by receivers becomes very difficult. An operator of the server is, therefore, confronted with an ever changing television network and it is, therefore, cumbersome to update the mappings between the second channel identifier set by the operator of the server and the first channel identifiers received at the receivers.

Even if an operator of the server would gather the information about received channel identifiers correctly, at the time of finishing this collecting of information, the database would be already outdated. Outdated, here, means that new stations, changes of station names, shutdown of stations or changes in the network structure occurred.

Therefore, according to the method depicted in Fig. 1, at S12, a second mapping might be determined based on a user input of a user of the first receiver. For example, the user might notice that an application using the first mapping does not correctly display certain information. For example, if the application is an electronic program guide (EPG), for example, the program information shown for a certain television channel might in fact be the information of another channel. Or there might be no information displayed at all since a first channel identifier is not yet available to the application. Therefore, the application on the server might have a user interface allowing the user to correct this deficiency. For example, the user via the user interface might be enabled to assign the program information to a correct television channel. By doing so, the user might indirectly assign the second channel identifier which might be associated with the program information to a further first channel identifier. The further first channel identifier might be a channel identifier also depending on the television network identifying the same television channel as the second channel identifier and/or the first channel identifier. The further first channel identifier might be a result of broadcasting the same television channel via different broadcasting media. For example, the first channel identifier might be an identifier in a cable network, whereas the further first channel identifier might be an identifier identifying the same television channel broadcast in a satellite network. Based on the user input, it might be possible to determine a second mapping between the further first channel identifier and the second channel identifier.

In other embodiments, user intervention, i.e. user input, may not be required. Some manufacturers may implement software on receivers which can store the triplet information or mapping in memory against a channel name such as "CNN INT". The receiver may identify another channel name received over the network such as "CNN International™". By operating for example a word stemming algorithm or some other intelligent algorithm, perhaps employing fuzzy logic, the receiver may determine that "CNN INT" and "CNN Internation" are in fact the same channel and transfer the appropriate mapping information, i.e. second mapping, to the server.

Determining the second mapping might also be illustrated at hand of the following example in a DVB environment. A certain television channel, e.g. CNN™, might be transmitted via a DVB-T network with the first channel identifier DVB://40.3.5. This first channel identifier might already be known at the server, so that the first mapping indicating a mapping between the first channel identifier and the second channel identifier set by the operator of the server for identifying CNN may be used to correctly display meta data for CNN at the receiver. This is possible, since the first mapping might be distributed to all receivers (or at least to subscriber receivers having a subscription for a certain meta data service). However, CNN might also be transmitted in a DVB-S network with the further first channel identifier DVB: / / 43.5.9. This further first channel identifier might not be known at the server. Therefore, a user of a receiver receiving CNN via the DVB-S network might not be able to view the meta data for CNN. The user, however, might notice this deficiency and correct it via a graphical user interface. For example, the user might be prompted to select CNN from a list of channels, when he currently views CNN. The list of channels might contain the channel names for which second channel identifiers are provided. When the user has selected CNN from the list, the receiver will know that the further first channel identifier DVB://43.5.9 corresponds to the second channel identifier set by the operator of the server to identify CNN. Thus, a respective second mapping between the second channel identifier and the further first channel identifier DVB://43.5.9 might be determined based on the user input.

At S14, the second mapping might be transmitted from the first receiver to the server. At S16, the server might provide to further receivers in the television network, e.g. a second receiver, the second mapping.

In the above example, the receiver receiving CNN at DVB: / /43.5.9 for which the user has input a user input, might send the second mapping to the server. The server can then distribute the second mapping to all receiver or the subscriber receivers. Thus, further receivers receiving CNN with ID DVB: / / 43.5.9 will now be able to display meta data for CNN.

Fig. 2A shows a system including a server 18, a first receiver 20, a second receiver 22, and a broadcaster 24.

The first and second receivers 20, 22 might run applications 26, 28. The applications might be provided by an operator of server 18 and may be subject to a subscription for a service offered by the operator. Thus, applications 26, 28 might be software modules included in first and second receivers 20, 22 that closely cooperate/interact with information provided by server 18. It is also possible that the receivers have hardware provided by the operator of the server or an affiliated service company. As mentioned, applications 26, 28 might allow providing meta data for television channels such as electronic program guide data. The provided data might not necessarily have to relate explicitly to a certain television channel. It could also contain advertisements or the like.

Applications 26, 28 may also be games or other interactive applications. Also, the additional data or meta data supplied may be related to content broadcast on one or more of the channels. The additional data may be audio video data. This additional data may be provided by the server. It can be transmitted from the server via the broadcast network, via the internet or via any other suitable communication channel between the server and the receivers.

First and second receivers 20, 22 might be a set top box, a television set, a recorder, a multimedia PC, a hand-held device and/or the like.

In the example of Fig. 2A, broadcaster 24 broadcasts a television channel 100, received by first and second receivers 20, 22. Together with the television channel 100, broadcaster 24 also transmits a first channel identifier 102-1.

If the broadcaster 24 transmits television channel 100 according to DVB standard, the first channel identifier 102-1 might e.g. be a triplet, e.g. defined as mentioned above as DVB: / /OID.TSID.SID.

The applications 26, 28 might use the first channel identifier 102-1 together with information, e.g. meta data, provided by server 18. Therefore, television channel 100 needs to be identified based on the first identifier 102-1. This may be done based on a second channel identifier defined by an operator of server 18. This way, applications 26, 28 may e.g. display correct information such as meta data or EPG data for television channel 100 that has been provided by server 18.

In the example of Fig. 2A, the operator of server 18 might have defined the second channel identifier 106 to identify television channel 100. Therefore, at server 18, a first mapping 30 might be stored in a mapping table. The first mapping 30 maps the id set by the operator of the server (second channel identifier) to the first channel identifier 102-1 of television channel 100. The first mapping 30 is then transmitted from server 18 to first and second receivers 20, 22. This way, applications 26 and 28 can provide or display information provided by the server based on the second channel identifier 106. Therefore, in applications 26, 28, the first channel identifier 102-1 is mapped to the second channel identifier 106 and the information provided by the server 18 which is assigned to the second channel identifier 106 might be processed in the applications 26, 28.

However, there could occur a problem when the broadcaster 24 changes the first channel identifier 102. A similar problem might also occur if the second receiver was receiving television channel 100 via another broadcaster.

In the example shown in Fig. 2B, it is assumed that broadcaster 24 has changed the first channel identifier from 102-1 in Fig. 1 to 102-2. Broadcaster 24, thus, now transmits television channel 100 together with the further first channel identifier 102-2.

The new, i.e. further, first channel identifier 102-2 identifying the same television channel 100 as in Fig. 2A, might not be known at the server. Therefore, applications 26, 28 might not be able to correctly display information for television channel 100. In other words, television channel 100 might not be identified correctly by first and second receivers 20, 22 or not identified at all.

A user of the first receiver 20 might notice this, i.e. the user might be annoyed since information such as e.g. meta data for television channel 100 is not displayed correctly. For example, if the application 26 is an electronic program guide, the user might notice that program information for a different television channel than the channel indicated by the electronic program guide is displayed, for example if the channel identifier 102-1 of Fig. 1 is now used for another television channel. In other words, this situation might occur if the first channel identifier was previously assigned to a second channel identifier identifying another television channel. It might also be possible that the user experiences that no information is displayed at all. This might result from assigning a first channel identifier by broadcaster 24 which has not been used for any television channel before.

Since the user of first receiver 20 might not be satisfied, application 26 might enable the user to assign the further first channel identifier 102-2 to the second channel identifier 106. This might be done via a graphical user interface allowing the user to select out of a list of television channels identified by names, a television channel corresponding to television channel 100 currently being viewed by the user. In other words, the user might recognize that television channel 100 is a certain television channel corresponding to the second channel identifier 106. Since the user recognizes television channel 100 he will correctly assign television channel 100 via first channel identifier 102-2 to the second channel identifier 106 used by the application 26 and provided by server 18.

Thus, by a user input 120 of a user of first receiver 20, a second mapping 32 between the further first channel identifier 102-2 and the second channel identifier 106 might be determined.

This second mapping 32 indicating that the further first channel identifier 102-2 corresponds to the second channel identifier 106 may then be transmitted from first receiver 20 server 18. Server 18 may store this second mapping 32 in a mapping table or other suitable data structure.

Further, server 18 might transmit the second mapping 32 to second receiver 22 and/or to first receiver 20. In this way, application 28 at second receiver 22 might be able to correctly identify television channel 100 broadcast by broadcaster 24 with first channel identifier 102-2 based on the second mapping 32. Thus, application 28 might be able to display information for television channel 100 correctly, which information has been provided by server 18 and which is associated with the second channel identifier. This is possible without any user interaction of the user of second receiver 22.

Thus, as has been shown in Fig. 2, it is possible that the second mapping 32 which has been determined based on user input 120 of a user of the first receiver 20 has a benefit for a user of the second receiver 22. The user of second receiver 22 does not have to input any user input and can still in application 28 correctly view information such as e.g. meta data or EPG data for television channel 100.

Thus, it is e.g. possible, to automatically update an electronic program guide in second receiver 22 based on the user input 120 by the user of first receiver 20. An operator of server 18 does not have to collect by hand the information about the first channel identifiers used by broadcaster 24 or by a variety of local broadcasters or other broadcasters.

In Figs. 2A and 2B, first and second receivers 20, 22 might substantially be a same model, e.g. having the same hardware and software configurations. Thus, also second receiver 22 might allow a user to input user feedback such as user feedback 120. However, for illustrative purposes, in Figs. 2A and 2B, the user of second receiver 22 has not made use of the possibility of inputting a user input.

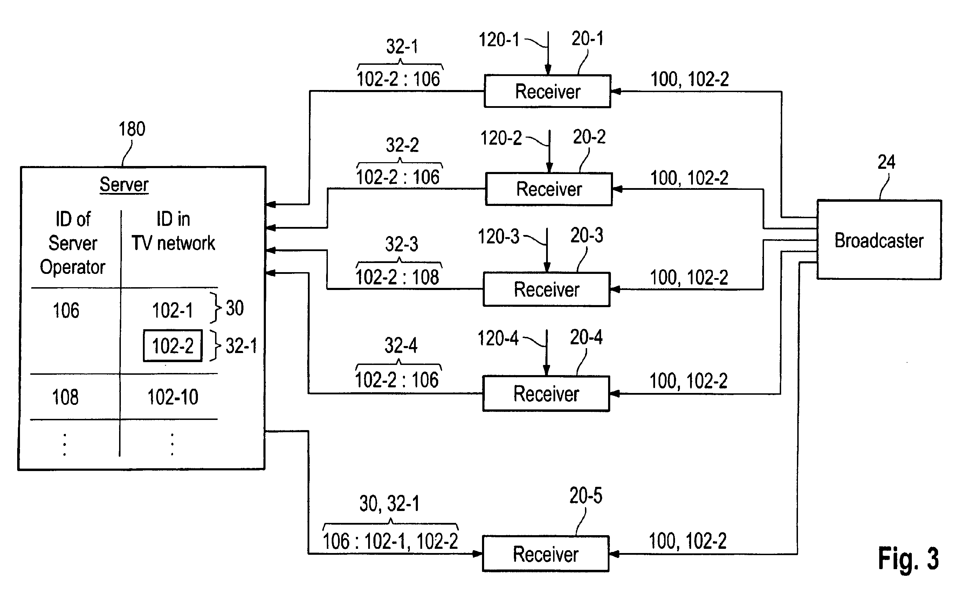

Fig. 3 shows an embodiment with a plurality of receivers 20-1, ..., 20-5. For illustrative purposes only, i.e. in a non-limiting example, some reference signs from previous Figs. are used.

Each of the receivers 20 may have similar hardware or software configurations. The receivers might e.g. be DVB receivers such as e.g. set top boxes or television sets, PC's, handhelds and so on.

Receivers 20 might run applications allowing a user of the receivers to input a user input 120. Each user input 120 may indicate second mappings, i.e. further second mappings, between the further first channel identifiers 102-2 and the second channel identifier 106 used at server 180 to identify television channel 100. Therefore, at each receiver 20, based on user input 120, a further second mapping may be determined.

In the example of Fig. 3, users of receivers 20-1, 20-2, 20-3, and 20-4 input respective user input 120-1, 120-2, 120-3, and 120-4.

Based on these user inputs 120-1, ..., 120-4, respective second mappings 32-1, ..., 32-4 are determined, e.g. by applications running on receivers 20-1, ..., 20-4.

In the example of Fig. 3, users of receivers 20-1, 20-2, and 20-4 input user input based on which a same second mapping 32 is determined, i.e. second mappings 32-1, 32-2, and 32-4 are indicate the same second mapping mapping channel identifier 102-2 used by the broadcaster to channel identifier 106 used at the server. However, user of receiver 20-3 inputs a different user input 120-3 leading to a different further second mapping 32-3. This second mapping 32-3 maps channel identifier 102-2 and channel identifier 108.

At server 180, each of the second mappings 32-1, ..., 32-4 are received, i.e. each of the plurality of further second mappings 32-1, ..., 32-4 is transmitted from receivers 20-1, ..., 20-4 to server 180.

Server 180 might then include all of the further second mappings 32 into a mapping table. However, it might be that some further second mappings 32 are not correct or unreliable. This might be the case since a user has for some mal operation inputted a wrong channel assignment. In other words, the second mappings might not be so reliable. For example, inexperienced users might accidentally select a wrong channel out of a list of channels or the like.

Therefore, the server 180 might only include a further second mapping in the mapping table if at least a predefined number of further second mappings are identical. In other words, a threshold might be defined and only if a number of further second mappings above the threshold are identical, the respective second mapping is included in the mapping table.

In the example of Fig. 3, the second mappings 32-1, 32-2, and 32-4 transmitted by receivers 120-1, 120-3, 120-4 are identical. The second mapping 32-3 provided by receiver 120-3 is, however, different. Thus, at server 180 it might be assumed that second mapping mapping first channel identifier 102-2 to second channel identifier 106 is reliable since a predefined number, in the example of Fig. 3 the predefined number is equal to 3, are identical. In praxis, the predefined number may be set much higher. The predefined number might depend e.g. on the number of receiver or subscribers to a certain service provided by server 18.

As seen in the example, second mapping 32-3 is not included in the mapping table since it has so far only been received by server 180 once. If, however, further mappings, i.e. a predefined number of mappings identical to 32-3, are received by the server, the server may include the mapping equal to mapping 32-3 into the mapping table.

As in Figs. 2A and 2B, the second mapping 32-1 (used as example - this is identical to 32-2 and 32-4 in the example) might then be sent to further receivers of users that have not input user input or to all receivers using the service of server 18. In the example of Fig. 3 there is one further receiver 20-5 where the user has not input user input. This user can now benefit from the user feedback of the users of receives 20-1, ..., 20-4. Further the possible wrong information (wrong second mapping) input by user of receiver 20-3 has no effect on the user of receiver 20-5.

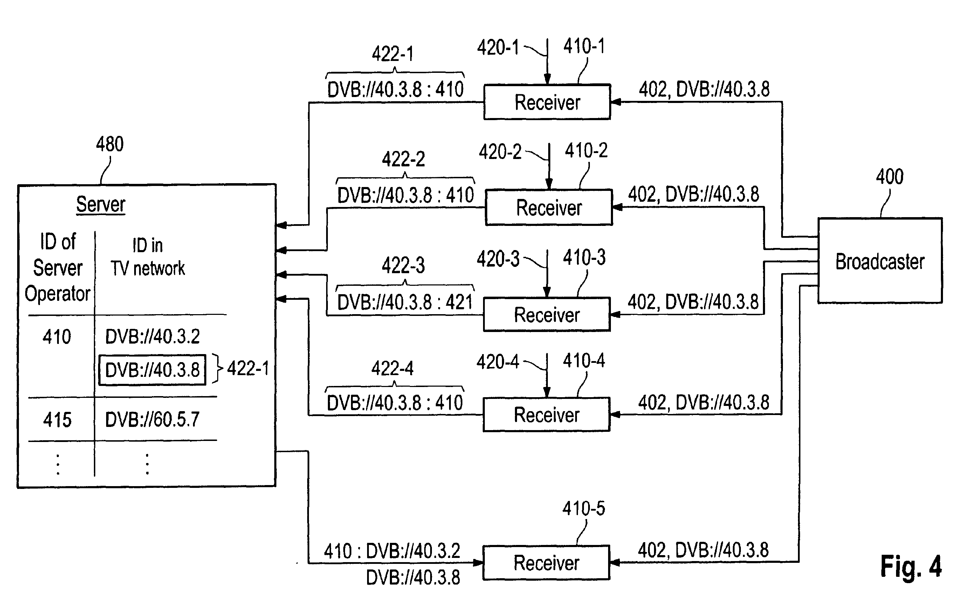

Fig. 4 shows an example where a broadcaster 400 transmits a television channel 402 according to a DVB standard. Consequently, broadcaster 400 transmits television channel 402 together with a first channel identifier, in the example DVB://40.3.8 which is a triplet according to DVB standard. DVB receives 410-1, ..., 410-5 receive television channel 402 together with the first channel identifier DVB:/ /40.3.8.

Broadcaster 400 might be a new broadcaster not yet known to an operator of server 480. Alternatively, broadcaster 400 might be known to an operator of server 480, however, broadcaster 400 might have changed the first channel identifier for television channel 402. Thus, first channel identifier DVB://40.3.8 might not yet be known at the server 480 and, consequently, this first channel identifier is also not yet known at receivers 410-1, ..., 410-5. Therefore, the users of receivers 410-1, ..., 410-5 might experience that an application running on the respective receivers is not correctly displaying information provided by server 480 as explained above.

As in the examples given above, the wrong display of information might lead certain users of the receivers to input respective user input 420-1, ..., 420-4. Based on the user input 420, respective second mappings 422 might be determined. Similar as in the example of Fig. 3, certain users of receivers might input a same user input. Consequently, the same second mapping might be determined. In the example of Fig. 4, users of receivers 410-1, 410-2, and 410-4 input a same user input leading to identical second mappings 422-1, 422-2, and 422-5. However, user of receiver 410-3 inputs another user input 420-3 leading to a different second mapping 422-3.

As in Fig. 3, server 480 judges that the second mapping 422-1 provided by receivers 410-1, 410-2, and 410-4 is reliable. Consequently, server 480 includes this mapping 422 in its mapping table and transmits the second mapping 422-1 to the receivers 410.

Although not shown in Figs. 3 and 4, for not complicating these Figures, the second mapping might be transmitted from server 480 to all of the receivers. Alternatively, it might be possible to transmit the second mapping only to receivers that have not provided the "correct" second mapping, i.e. a second mapping that has been determined to be reliable.

For example, in Fig. 4, second mapping 422-1 might only be transmitted from server 480 to receivers 410-3 and 410-5. The reason is that server 480 judges that receivers 410-1, 410-2, and 410-4 have provided the correct second mapping 422, and consequently do not require an update. Thus, network traffic might be reduced.

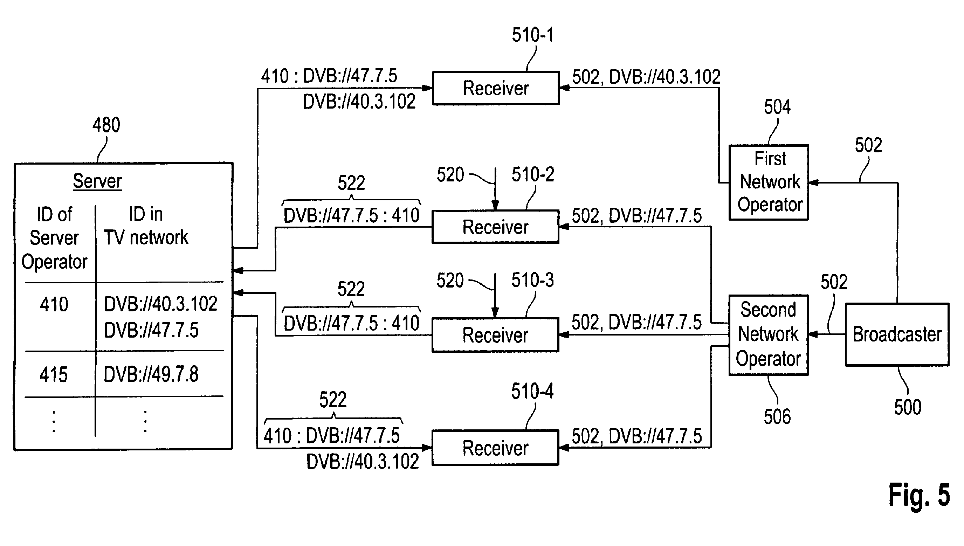

Fig. 5 shows a further example where a broadcaster 500 broadcasts a television channel 502 to first and second network operators 504, 506. The first and second network operators 504, 506 might be local network operators operating in a predefined region. For example, broadcaster 500 might be a broadcaster operating nationwide, such as e.g. CNN, whereas first and second network operators 504, 506 operate to locally distribute the television channel 502 in a region of the nation.

Consequently, first network operator 504 might transmit television channel 502 together with a first channel identifier DVB: / / 40.3.102 that is different from the first channel identifier DVB://47.7.5 used by second network operator 506.

Although Fig. 5 is described at hand of an example based on DVB standard, of course it is likewise applicable to other kind of standards, i.e. independent of any standard. It will be easy for those skilled in the art to think of an embodiment according to Fig. 5 similar as to that shown in Figs. 2 and 3 without a relation to DVB standard.

Other standards include analogue broadcasts, ISDB [e.g. in Japan] and ATSC [e.g. in the US]. ISDB provides similar structures as those for DVB including Network_id, transport_stream_id and service_id. Descriptions of these can be found on page 2, line 3 of the "ARIB Operational Guidelines for Digital Terrestrial Television Broadcasting". Embodiment of the invention may find particular application in the United States where there are many independent broadcasters. For example, different US Cable systems or operators provide CNN International on different mappings. As an example, ATSC Implementation Guidelines for Program and System Information Protocol provide suitable identifiers for implementing the present invention. http://www.atsc.org/standards/a_69.pdf

The second network operator 506 might be a new network operator not yet known at server 480. Consequently, an application running on receivers 510-2, 510-3, 510-4 receiving television channel 502 from second network operator 506 might experience that wrong or no information is displayed, e.g. by an electronic program guide or the like. Therefore, as before, some users might provide a user input 520. In the example, users of receivers 510-2, 510-3 input user input 520. Based on this user input 520, a second mapping 522 mapping the second channel identifier 410 used at server 480 to the first identifier DVB://47.7.5 used by second network operator 506.

This second mapping 522 is transmitted to server 480. Since the second mapping 522 is identical for a plurality of receivers (in the example only two receivers are shown, however, in reality a larger number of receivers is likely to exist), the second mapping 522 is determined to be reliable at server 480. Therefore, second mapping 522 is included in the mapping table and the second mapping is provided to all of the receivers 510-1, ..., 510-4 connected to the server.

Thus, also a user of receiver 510-4 will get the correct second mapping 522 although he has not input user input.

There is also an advantage if user of receiver 510-1 decides to change his network operator. For example the user of receiver 510-1 might decide to subscribe a service from the second network operator 506 instead of continuing to use the service of first network operator 504. In this case, since receiver 510-1 receives all of the mapping information from the mapping table of server 480, he will also benefit from the user input 520 of users of receivers 510-2, 510-3 already using the service of second network operator 506.

Fig.6 shows an example of a possible application.

In an initial state 600 of a receiver, a user might have assigned a certain television channel to a certain channel number. In the example of Fig. 6, the user might have assigned a television channel identified in the network by an ID DVB://40.3.7 to channel number 5. Thus, if the user presses e.g. a key 5 on the remote control, the respective television channel is displayed for viewing.

However, as already mentioned, in DVB networks or other television networks, the channel identifiers (first channel identifiers) used by the television network might frequently change. After such a change of the channel identifier used by the network operator, the user might experience that when pressing key 5 on the remote control a different or no television channel will be displayed.

For example, the user might have programmed his receiver to view the channel CNN when pressing key 5. After a change of the (first) identifier in the television network, the channel identifier is now used for NBC. Thus, if the user presses key 5 on the remote control, he experiences that NBC starts to be displayed instead of CNN as he has programmed before. An onscreen information 610 might still display the information that channel number 5 is assigned to CNN.

Many users of many receivers of the television network might experience this situation. Therefore, some of the users might decide to provide user input based on which a new mapping (second mapping) might be determined. This second mapping might be received at 602. This mapping might indicate the new channel identifier DVB://40.3.10 now used by CNN. Thus, at 604, the new mapping (second mapping) might be included in the mapping table of the receiver. Therefore, the user will now, when pressing key 5 on the remote control, see again CNN on channel number 5.

Thus, a server providing the mapping at 602 might automatically update the mappings in the receivers so that users can continue to consistently view the same television channel on the same program channel number. In order to realize such functioning shown in Fig. 6, it may be that the server provides respective software updates for receivers in which the ID used by the operator of the server (second channel identifier) is assigned to the channel number programmed by the user.

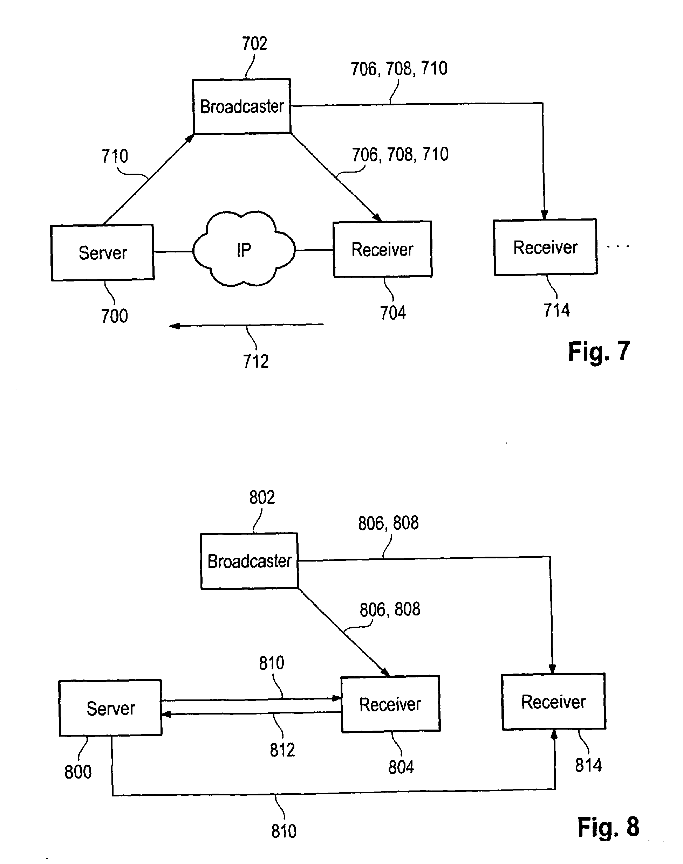

In Figs. 1 to 6, it has been shown that second mappings are distributed to receivers. This may be done via the internet. Alternatively or in addition, the second mappings may also be sent from the server to the broadcast station(s). The broadcast stations may then distribute the second mappings to the receivers. This is also illustrated in Figs. 7 and 8.

Fig. 7 shows an embodiment including a server 700, broadcaster 702, and receiver 704.

Broadcaster 702 might transmit a television channel 706 together with a first channel identifier 708. Server 700 might provide electronic program data 710 to broadcaster 702 for television channel 706. The data 710 might include a mapping mapping the first channel identifier 708 to a second channel identifier used at server 700 to identify television channel 706.

The data 710 is transmitted to receiver 704 via broadcaster 702.

Thus, at receiver 704, an electronic program guide might be displayed, wherein program information provided by server 700 is identified via the second channel identifier used by the operator of server 700 to identify television channel 706.

If, for some reason, first channel identifier 708 is changed, and, consequently, a first mapping between the first channel identifier 708 and the second channel identifier used by the operator of the server 700 is incorrect, a user of receiver 704 might experience that wrong or no EPG data are displayed for television channel 706. Therefore, the user of receiver 704 might decide to input user input which may be used to determine a second mapping between the new first channel identifier (further first channel identifier) and the second channel identifier used at the server. This second mapping 712 might be transmitted from receiver 704 to server 700 via the internet IP. Alternatively or additionally, second mapping 712 may be transmitted from receiver 704 to server 700 via a return path in a broadcaster network, e.g. in a cable network.

The server 700 evaluates the second mapping as explained above, i.e. if a large number of users of receivers receiving television channel 706 provide the same second mapping, the server will include this new second mapping into data 710.

Thus, also a receiver 714 where the user did not input user input, will receive the updated second mapping. Consequently, the user of receiver 714 will also be able to correctly display program guide information for television channel 706 with a changed first channel identifier.

Fig. 8 shows a further embodiment. The difference to Fig. 7 is that the EPG data are transmitted to the receivers via a different network connection 810. For example, network connection 810 is over the internet. Also, network connection 812 might be an internet connection.

Thus, in the example of Fig. 8, server 800 uses the internet to distribute the program guide information. Again, as in Fig. 7, the program guide information 810 might include a mapping between a second channel identifier used by the operator of server 800 to identify a television channel 806 broadcast by broadcaster 802 to receivers 804, 814. However, the identifier for television channels 806 used by broadcaster 802, i.e. the first channel identifier 808, might change. Therefore, a user of receiver 804 might input user input based on which a new mapping (second mapping) is determined. This second mapping denoted by reference sign 812 is transmitted to server 800. The server 800 might then include this new second mapping into data 810 distributed to the different receivers. Therefore, at receiver 814, a user might benefit from the user input of the user of receiver 804 in that an electronic program guide information is now correctly displayed.

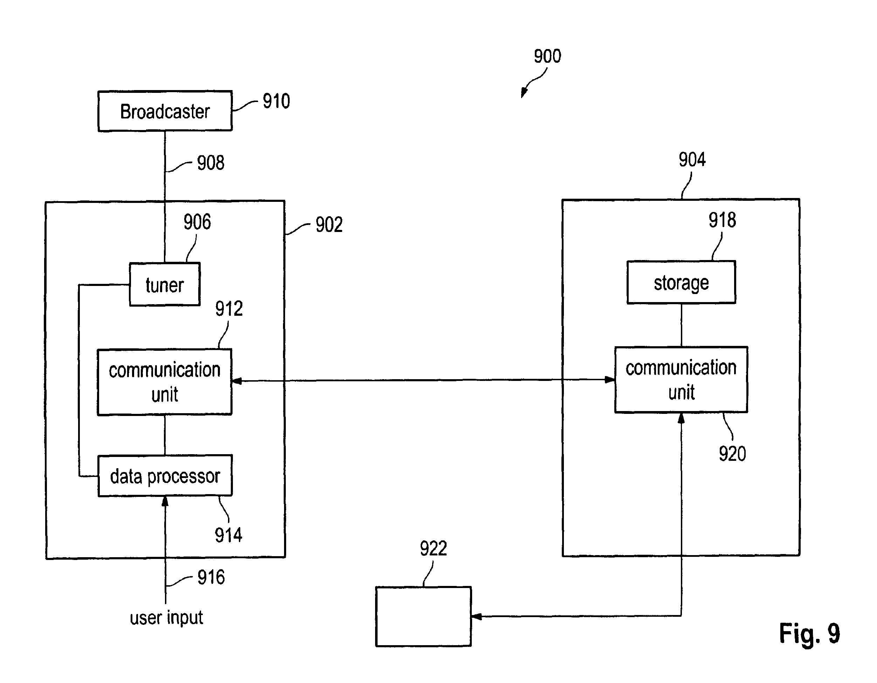

Fig. 9 shows a system 900 with a television receiver 902 and a server 904.

The television receiver 902 has a tuner 906 adapted to receive a television channel 908 broadcast in a television network by a broadcaster 910. Further, television receiver 902 has a communication unit 912 adapted to receive, from server 904, a first mapping between a first channel identifier, e.g. a triplet in case of DVB, and a second channel identifier, wherein the first channel identifier depends on the television network and the second channel identifier is set by an operator of the server 904, the first and second channel identifiers identifying the television channel. Television receiver 902 also has a data processor 914 adapted to determine, based on a user input 916 of a user, a second mapping between a further first channel identifier and the second channel identifier, wherein the further first channel identifier depends on the television network and identifies said television channel. The communication unit 912 may further adapted to transmit, to server 904, the second mapping.

Server 904 comprises a storage 918 adapted to store the first mapping between the first channel identifier and the second channel identifier. Server 904 further has a communication unit 920 adapted to receive, from television receiver 902 the second mapping. Communication unit 920 is further adapted to transmit, from the server 902 to a second television receiver 922, the second mapping.

## Claims

1. A method for identifying a television channel transmitted in a television network, comprising:
transmitting, from a server to a first receiver, a first mapping between a first channel identifier and a second channel identifier, wherein the first channel identifier is dependent on the television network and identifies the television channel in the television network, and wherein the second channel identifier is set by an operator of the server, the server providing meta data, the second channel identifier identifying the television channel with respect to the meta data;
determining, at the first receiver, a second mapping between a further first channel identifier and the second channel identifier for correcting the first mapping, wherein the further first channel identifier depends on the television network and identifies said television channel in the television network:
transmitting, from the first receiver to the server, the second mapping;
transmitting, from the server to a second receiver, the second mapping, the second receiver being a receiver other than the first receiver.

2. The method of claim 1, wherein the second mapping is determined based on a user input of a user of the first receiver.

3. The method of claim 1 or 2, wherein a plurality of further second mappings between a plurality of further first channel identifiers and the second channel identifier is respectively received from a plurality of further receivers and the further second mappings are transmitted from the further receivers to the server.

4. The method of claim 3, wherein the plurality of further second mappings is transmitted from the server to the second receiver.

5. The method of claim 4, wherein the plurality of further second mappings is transmitted from the server to the second receiver only if at least a predefined number of the further second mappings are identical.

6. The method of any of the preceding claims, wherein the server transmits, to the second receiver, information associated with the television channel, the information being assigned to the second channel identifier.

7. The method of any of the preceding claims, wherein, at the second receiver, the second channel identifier is assigned to a channel number that is used by a user of the second receiver to select the television channel for viewing.

8. The method of any of the preceding claims, wherein the first channel is a triplet according to a DVB standard.

9. The method of any of the preceding claims, wherein the television network operates according to a standard selected from a group consisting of DVB, ATSC and ISDB standards.

10. A television receiver, comprising:
a tuner adapted to receive a television channel broadcast in a television network;
a communication unit adapted to receive, from a server, a first mapping between a first channel identifier and a second channel identifier, wherein the first channel identifier is dependent on the television network and identifies the television channel in the television network, and wherein the second channel identifier is set by an operator of the server, the server providing meta data, the second channel identifier identifying the television channel with respect to the meta data;
a data processor adapted to determine a second mapping between a further first channel identifier and the second channel identifier for correcting the first mapping, wherein the further first channel identifier depends on the television network and identifies said television channel in the television network;
wherein the communication unit is further adapted to transmit, to the server, the second mapping.

11. The television receiver of claim 10, further comprising a user interface adapted to receive user input, wherein the data processor is adapted to determine the second mapping based on the user input.

12. A server, comprising:
a storage adapted to store a first mapping between a first channel identifier and a second channel identifier, wherein the first channel identifier is dependent on a television network and identifies a television channel in the television network, and wherein the second channel identifier is set by an operator of the server, the server providing meta data, the second channel identifier identifying the television channel with respect to the meta data;
a communication unit adapted to receive, from a first television receiver, a second mapping between a further first channel identifier and the second channel identifier, wherein the further first channel identifier depends on the television network and identifies said television channel within the television network, the second mapping having been determined for correcting the first mapping, the communication unit being further adapted to transmit, from the server to a second television receiver, the second mapping, the second television receiver being another receiver than the first receiver.

13. A system comprising:
a television receiver according to claim 10; and
a server according to claim 12.

14. A computer program product including computer program instructions that cause a computer to execute a method according to claim 1.

## Patentansprüche

1. Verfahren zum Identifizieren eines Fernsehkanals, der in einem Fernsehnetz gesendet wird, das enthält:
Senden einer ersten Abbildung zwischen einem ersten Kanalidentifizierer und einem zweiten Kanalidentifizierer von einem Server zu einem ersten Empfänger, wobei der erste Kanalidentifizierer von dem Fernsehnetz abhängt und den Fernsehkanal in dem Fernsehnetz identifiziert und wobei der zweite Kanalidentifizierer durch einen Bediener des Servers eingestellt wird, wobei der Server Metadaten bereitstellt, wobei der zweite Kanalidentifizierer den Fernsehkanal in Bezug auf die Metadaten identifiziert;
Bestimmen einer zweiten Abbildung zwischen einem weiteren ersten Kanalidentifizierer und dem zweiten Kanalidentifizierer bei dem ersten Empfänger, um die erste Abbildung zu korrigieren, wobei der weitere erste Kanalidentifizierer von dem Fernsehnetz abhängt und den Fernsehkanal in dem Fernsehnetz identifiziert;
Senden der zweiten Abbildung von dem ersten Empfänger zu dem Server;
Senden der zweiten Abbildung von dem Server zu einem zweiten Empfänger, wobei der zweite Empfänger ein von dem ersten Empfänger verschiedener Empfänger ist.

2. Verfahren nach Anspruch 1, wobei die zweite Abbildung auf der Grundlage einer Anwendereingabe eines Anwenders des ersten Empfängers bestimmt wird.

3. Verfahren nach Anspruch 1 oder 2, wobei mehrere weitere zweite Abbildungen zwischen mehreren weiteren ersten Kanalidentifizierern und dem zweiten Kanalidentifizierer von mehreren weiteren Empfängern empfangen werden und die weiteren zweiten Abbildungen von den weiteren Empfängern zu dem Server gesendet werden.

4. Verfahren nach Anspruch 3, wobei die mehreren weiteren zweiten Abbildungen von dem Server zu dem zweiten Empfänger gesendet werden.

5. Verfahren nach Anspruch 4, wobei die mehreren weiteren zweiten Abbildungen von dem Server zu dem zweiten Empfänger nur dann gesendet werden, wenn wenigstens eine im Voraus definierte Anzahl der weiteren zweiten Abbildungen identisch sind.

6. Verfahren nach einem der vorhergehenden Ansprüche, wobei der Server zu dem zweiten Empfänger Informationen sendet, die dem Fernsehkanal zugeordnet sind, wobei die Informationen dem zweiten Kanalidentifizierer zugewiesen sind.

7. Verfahren nach einem der vorhergehenden Ansprüche, wobei bei dem zweiten Empfänger der zweite Kanalidentifizierer einer Kanalnummer zugewiesen ist, die von einem Anwender des zweiten Empfängers verwendet wird, um den Fernsehkanal für die Betrachtung auszuwählen.

8. Verfahren nach einem der vorhergehenden Ansprüche, wobei der erste Kanal ein Triplet gemäß einer DVB-Norm ist.

9. Verfahren nach einem der vorhergehenden Ansprüche, wobei das Fernsehnetz in Übereinstimmung mit einer Norm arbeitet, die aus einer Gruppe gewählt ist, die aus der DVB-, der ATSC- und der ISDB-Norm besteht.

10. Fernsehempfänger, mit:
einer Abstimmeinrichtung, die dazu ausgelegt ist, eine Fernsehkanalrundsendung in einem Fernsehnetz zu empfangen;
einer Kommunikationseinheit, die dazu ausgelegt ist, von einem Server eine erste Abbildung zwischen einem ersten Kanalidentifizierer und einem zweiten Kanalidentifizierer zu empfangen, wobei der erste Kanalidentifizierer von dem Fernsehnetz abhängt und den Fernsehkanal in dem Fernsehnetz identifiziert und wobei der zweite Kanalidentifizierer durch einen Bediener des Servers eingestellt wird, wobei der Server Metadaten bereitstellt, wobei der zweite Kanalidentifizierer den Fernsehkanal in Bezug auf die Metadaten identifiziert;
einem Datenprozessor, der dazu ausgelegt ist, eine zweite Abbildung zwischen einem weiteren ersten Kanalidentifizierer und dem zweiten Kanalidentifizierer zu bestimmen, um die erste Abbildung zu korrigieren, wobei der weitere erste Kanalidentifizierer von dem Fernsehnetz abhängt und den Fernsehkanal in dem Fernsehnetz identifiziert;
wobei die Kommunikationseinheit ferner dazu ausgelegt ist, die zweite Abbildung zu dem Server zu senden.

11. Fernsehempfänger nach Anspruch 10, der ferner eine Anwenderschnittstelle enthält, die dazu ausgelegt ist, eine Anwendereingabe zu empfangen, wobei der Datenprozessor dazu ausgelegt ist, auf der Grundlage der Anwendereingabe die zweite Abbildung zu bestimmen.

12. Server, mit:
einem Speicher, der dazu ausgelegt ist, eine erste Abbildung zwischen einem ersten Kanalidentifizierer und einem zweiten Kanalidentifizierer zu speichern, wobei der erste Kanalidentifizierer von einem Fernsehnetz abhängt und einen Fernsehkanal in dem Fernsehnetz identifiziert und wobei der zweite Kanalidentifizierer durch einen Bediener des Servers eingestellt wird, wobei der Server Metadaten bereitstellt, wobei der zweite Kanalidentifizierer den Fernsehkanal in Bezug auf die Metadaten identifiziert;
einer Kommunikationseinheit, die dazu ausgelegt ist, von einem ersten Fernsehempfänger eine zweite Abbildung zwischen einem weiteren ersten Kanalidentifizierer und dem zweiten Kanalidentifizierer zu empfangen, wobei der weitere erste Kanalidentifizierer von dem Fernsehnetz abhängt und den Fernsehkanal in dem Fernsehnetz identifiziert, wobei die zweite Abbildung bestimmt worden ist, um die erste Abbildung zu korrigieren, wobei die Kommunikationseinheit ferner dazu ausgelegt ist, die zweite Abbildung von dem Server zu einem zweiten Fernsehempfänger zu senden, wobei der zweite Fernsehempfänger ein anderer Empfänger als der erste Empfänger ist.

13. System, das enthält:
einen Fernsehempfänger nach Anspruch 10; und
einen Server nach Anspruch 12.

14. Computerprogrammprodukt, das Computerprogrammbefehle enthält, die einen Computer dazu veranlassen, ein Verfahren nach Anspruch 1 auszuführen.

## Revendications

1. Procédé d'identification d'un canal de télévision transmis dans un réseau de télévision, consistant à :
transmettre, d'un serveur à un premier récepteur, un premier mappage entre un premier identifiant de canal et un deuxième identifiant de canal, dans lequel le premier identifiant de canal dépend du réseau de télévision et identifie le canal de télévision dans le réseau de télévision, et dans lequel le deuxième identifiant de canal est défini par un opérateur du serveur, le serveur fournissant des métadonnées, le deuxième identifiant de canal identifiant le canal de télévision par rapport aux métadonnées ;
déterminer, dans le premier récepteur, un deuxième mappage entre un autre premier identifiant de canal et le deuxième identifiant de canal pour corriger le premier mappage, dans lequel l'autre premier identifiant de canal dépend du réseau de télévision et identifie ledit canal de télévision dans le réseau de télévision ;
transmettre, du premier récepteur au serveur, le deuxième mappage ;
transmettre, du serveur à un deuxième récepteur, !e deuxième mappage, le deuxième récepteur étant un récepteur autre que le premier récepteur.

2. Procédé selon la revendication 1, dans lequel le deuxième mappage est déterminé sur la base d'une entrée d'utilisateur d'un utilisateur du premier récepteur.

3. Procédé selon la revendication 1 ou 2, dans lequel une pluralité d'autres deuxièmes mappages entre une pluralité d'autres premiers identifiants de canal et le deuxième identifiant de canal sont respectivement reçus d'une pluralité d'autres récepteurs et les autres deuxièmes mappages sont transmis des autres récepteurs au serveur.

4. Procédé selon la revendication 3, dans lequel la pluralité d'autres deuxièmes mappages est transmise du serveur au deuxième récepteur.

5. Procédé selon la revendication 4, dans lequel la pluralité d'autres deuxièmes mappages n'est transmise du serveur au deuxième récepteur que si au moins un nombre prédéfini des autres deuxièmes mappages sont identiques.

6. Procédé selon l'une quelconque des revendications précédentes, dans lequel le serveur transmet, au deuxième récepteur, des informations associées au canal de télévision, les informations étant attribuées au deuxième identifiant de canal.

7. Procédé selon l'une quelconque des revendications précédentes, dans lequel, dans le deuxième récepteur, le deuxième identifiant de canal est attribué à un numéro de canal qui est utilisé par un utilisateur du deuxième récepteur pour sélectionner le canal de télévision à regarder.

8. Procédé selon l'une quelconque des revendications précédentes, dans lequel le premier canal est un triplet selon une norme DVB.

9. Procédé selon l'une quelconque des revendications précédentes, dans lequel le réseau de télévision fonctionne selon une norme sélectionnée dans un groupe consistant en les normes DVB, ATSC et ISDB.

10. Récepteur de télévision, comprenant :
un syntoniseur conçu pour recevoir une diffusion de canal de télévision dans un réseau de télévision ;
une unité de communication conçue pour recevoir, d'un serveur, un premier mappage entre un premier identifiant de canal et un deuxième identifiant de canal, dans lequel le premier identifiant de canal dépend du réseau de télévision et identifie le canal de télévision dans le réseau de télévision, et dans lequel le deuxième identifiant de canal est défini par un opérateur du serveur, le serveur fournissant des métadonnées, le deuxième identifiant de canal identifiant le canal de télévision par rapport aux métadonnées ;
un processeur de données conçu pour déterminer un deuxième mappage entre un autre premier identifiant de canal et le deuxième identifiant de canal pour corriger le premier mappage, dans lequel l'autre premier identifiant de canal dépend du réseau de télévision et identifie ledit canal de télévision dans le réseau de télévision ;
dans lequel l'unité de communication est en outre conçue pour transmettre, au serveur, le deuxième mappage.

11. Récepteur de télévision selon la revendication 10, comprenant en outre une interface utilisateur conçue pour recevoir une entrée d'utilisateur, dans lequel le processeur de données est conçu pour déterminer le deuxième mappage sur la base de l'entrée d'utilisateur.

12. Serveur, comprenant :
une mémoire conçue pour mémoriser un premier mappage entre un premier identifiant de canal et un deuxième identifiant de canal, dans lequel le premier identifiant de canal dépend d'un réseau de télévision et identifie un canal de télévision dans le réseau de télévision, et dans lequel le deuxième identifiant de canal est défini par un opérateur du serveur, le serveur fournissant des métadonnées, le deuxième identifiant de canal identifiant le canal de télévision par rapport aux métadonnées ;
une unité de communication conçue pour recevoir, d'un premier récepteur de télévision, un deuxième mappage entre un autre premier identifiant de canal et le deuxième identifiant de canal, dans lequel l'autre premier identifiant de canal dépend du réseau de télévision et identifie ledit canal de télévision dans le réseau de télévision, le deuxième mappage ayant été déterminé pour corriger le premier mappage, l'unité de communication étant en outre conçue pour transmettre, du serveur à un deuxième récepteur de télévision, le deuxième mappage, le deuxième récepteur de télévision étant un récepteur autre que le premier récepteur.

13. Système comprenant :
un récepteur de télévision selon la revendication 10 ; et
un serveur selon la revendication 12.

14. Produit-programme d'ordinateur comprenant des instructions de programme d'ordinateur qui amènent un ordinateur à exécuter un procédé selon la revendication 1.
